# EUROPEAN PATENT SPECIFICATION

(11) **EP 3 926 381 B1**
(45) Date of publication and mention of the grant of the patent: **29.05.2024**
(21) Application number: 20181031.4
(22) Date of filing: 19.06.2020
(51) Int. Cl.: G02B 7/182, G02B 27/64, G02B 27/01

(54) **METHOD OF MOUNTING A MIRROR MOUNT FOR A HEAD-UP DISPLAY IN A HOUSING**
VERFAHREN ZUR MONTAGE EINER SPIEGELHALTERUNG FÜR EIN HEAD-UP-DISPLAY IN EINEM GEHÄUSE
PROCÉDÉ D'ASSEMBLAGE D'UN SUPPORT DE MIROIR POUR UN AFFICHAGE TÊTE HAUTE DANS UN BOÎTIER

(43) Date of publication of application: 22.12.2021
(73) Proprietor: Jabil Inc., St. Petersburg, Florida 33716 (US)
(72) Inventor: KOVACS, Ernst, 2514 Traiskirchen (AT)
(74) Representative: Gruber, Philipp

(56) References cited:
- EP-A2- 1 834 589
- CN-U- 204 610 953
- CN-U- 205 896 212
- JP-A- 2007 086 226
- JP-A- 2014 215 459
- KR-A- 20110 073 328

## Description

The present invention relates to a method for mounting a mirror mount for a Head-Up Display (HUD) in a housing, the housing comprising a through-hole between a mounting side of the housing and an accessible side of the housing. In a further aspect, the present invention relates to a mounting kit for mounting a mirror mount for a Head-Up Display in a housing.

A head-up display or HUD is a transparent display panel that presents information to a user without requiring users to look away from a preferred viewing direction. The origin of the name stems from a pilot being able to view information with the head positioned "up" and looking forward, instead of angled down looking at lower instruments. Although they were initially developed for military aviation, HUD systems are nowadays used in commercial aircraft, automobiles, and other applications.

For example, a driver can view traffic and the road in front of the vehicle through the windshield of the vehicle while at the same time a projector projects information onto the windshield. Such a HUD system typically comprises a video data source such as a computer, a projector, and a mirror for deflecting the output of the projector onto the windshield.

Mirror positioning mechanisms require careful consideration to ensure the performance in all kinds of environmental conditions such as changing humidity and a wide range of temperatures especially within a dashboard of a car. A key design consideration relates to vibration. A mobile HUD system must have a high resistance to vibration in order to provide a stable image for the user. Failure to control vibration associated with the mirror in particular can result in a display that is irritating for the viewer and unpleasant to use over extended periods. Accordingly, a mirror and its respective mirror mount in a HUD system should have a high stability and a high natural frequency.

Thus the mirror needs to be positioned very rigid in the operating position to prevent vibration and reduced image quality. Therefore, a mirror holder and the connecting mount on the car body have to be very stiff.

To achieve this, the mirror itself is usually mounted on a mirror mount, which is in turn mounted in a housing in such a way that it can pivot about a mirror axis. A spring is mounted between the mirror mount and the housing to spring-tension the mirror mount with respect to the housing. The mirror mount can then be calibrated more easily and vibrations occurring in the housing are not directly transferred onto the mirror mount. However, as space for mounting the HUD is limited, especially in vehicles, the spring is usually not accessible anymore after the mirror mount has been inserted into the housing. The spring and in turn the whole mirror mount can thus not be removed from the housing anymore after mounting.

JP 2007 086226 A discloses a mirror mounted in a head mounted display according to the prior art methods.

It is therefore an object of the invention to provide a method and a corresponding mounting kit for mounting a mirror mount for a HUD in such a way that movable parts between the mirror mount and the housing can still be accessed after mounting.

In a first aspect of the invention, this aim is achieved by a method for mounting a mirror mount for a Head-Up Display in a housing,
the housing comprising a through-hole between a mounting side of the housing and an accessible side of the housing;
wherein the method comprises:
   - attaching a first end of a spring to the mirror mount;
   - providing the mirror mount at the mounting side of the housing;
   - leading the spring through the through-hole of the housing;
   - attaching a stopper onto a second end of the spring, wherein the stopper is configured to have a size such that it cannot pass the through-hole; and
   - at the accessible side of the housing, releasing the second end of the spring such that the stopper is retained at the accessible side of the housing or in the through-hole of the housing.

The method has the advantage that the spring is mounted in such a way that it can be disconnected from the mirror mount after the mirror mount is mounted in the housing. While the mirror mount is mounted, the spring is anchored in the housing with the same stability as in the state of the art. However, as the stopper can be removed from the housing, the spring can be detached from the housing to make the space between the mirror mount and the housing accessible as the mirror mount can then be removed from its mounting position in the housing.

Usually, movable parts such as a rotatable cam and a corresponding bolt of the mirror mount are located between mirror mount and housing. As the stopper can be removed due to the inventive mounting method, the accessibility of the moving parts allows for an improved maintenance with respect to the state of the art.

In general, the steps of the above-mentioned method can be performed in any order as long as the method can be technically executed. For example, first the stopper could be attached to the spring, then the spring could be lead through the through-hole and then the first end of the spring could be attached to the mirror mount. Preferably, however, the method steps are performed in the order listed above, wherein in the step of leading the spring through the through-hole of the housing comprises the step of leading the second end of the spring through the through-hole.

Preferably, the method comprises the step of leading an auxiliary tool through the through-hole and attaching the auxiliary tool to the second end of the spring before leading the second end of the spring through the through-hole, and further comprises the step of removing the auxiliary tool from the second end of the spring before attaching the stopper. This has the advantage that the second end of the spring can be more easily lead through the through-hole without having to manually push the spring through the through-hole.

Further preferably, the method comprises the step of inserting a bushing, preferably with an inner protrusion or tapering, into the through-hole of the housing, wherein the stopper is retainable in the bushing. The bushing has the advantage that the through-hole of the housing can be manufactured without any special means such that retaining functions for the stopper, for example, can be embodied by the bushing only. Furthermore, wear of the through-hole can effectively be prevented through the bushing.

Especially in embodiments in which the stopper is flush with the housing when retained in the through-hole, it is preferred if the stopper comprises a threaded bore on the side facing the accessible side of the housing to hold an auxiliary screw for removing the stopper. This allows the stopper to be easily removed from the through-hole of the housing as the auxiliary screw can be used to grip the stopper and pull said stopper out of the through-hole.

In a first preferred embodiment of the invention, the second end of the spring comprises a hook for attaching the stopper. In this embodiment, the spring can be constructed in a simple manner, for example if it is embodied as a linear tension spring, by having one of the ends of the spring be formed as the hook. As such, even commonly available springs can be used for the inventive method.

In said embodiment, it is preferred if the stopper comprises a removable shaft to hold the hook of the spring. To attach the stopper to the second end of the spring, in this embodiment the hook is inserted into the stopper and the removable shaft is then lead through at least one hole of the stopper and through the hook. By means of this, the stopper can be attached onto the spring in an uncomplicated manner. Alternatively, said bold could also be permanently attached to the stopper or embodied integrally with the stopper and the hook of the spring could be hooked over the shaft.

In a second preferred embodiment, the second end of the spring is tapered and the stopper has a gap such that the stopper can be slid onto the tapered spring for attaching the stopper onto the spring. While the spring has to be constructed in a special manner, attaching the stopper to the second end of the spring is even easier in this embodiment. The spring could also have the same tapering on the first end such that the first end of the spring could be attached to the mirror mount, which in this case also has a gap.

Further advantageously, the stopper comprises a circumferential gasket such that the stopper is sealed with respect to the housing when the stopper is retained in the through-hole. This prevents dust and other particles to enter the space between the housing and the mirror mount. In addition, the gasket provides an improved fit of the stopper in the housing.

In a second aspect of the invention, there is provided a mounting kit for mounting a mirror mount for a Head-Up Display in a housing, the mounting kit comprising a spring and a stopper, wherein a first end of the spring is attachable to the mirror mount and the stopper is attachable to a second end of the spring, wherein the stopper is configured to have a size such that it cannot pass the through-hole through which the spring can be lead.

The mounting kit has the same advantages as the method and can be provided with the same embodiments as described above for the method.

Further details and advantages of the mirror mount for a head-up display according to the invention will become more apparent in the following description and the accompanying drawings.
Figure 1 shows a mirror mount mounted in a housing.
Figure 2 shows a method for mounting the mirror mount in the housing.
Figure 3 shows a detail of the mounting method of figure 2.
Figure 4 shows the step of attaching a stopper to an end of a spring.
Figure 5 shows details of the stopper of Figure 4 when retained in the housing.
Figure 6 shows the stopper in a further view.
Figure 7 shows an alternative embodiment of a spring used in the inventive method.

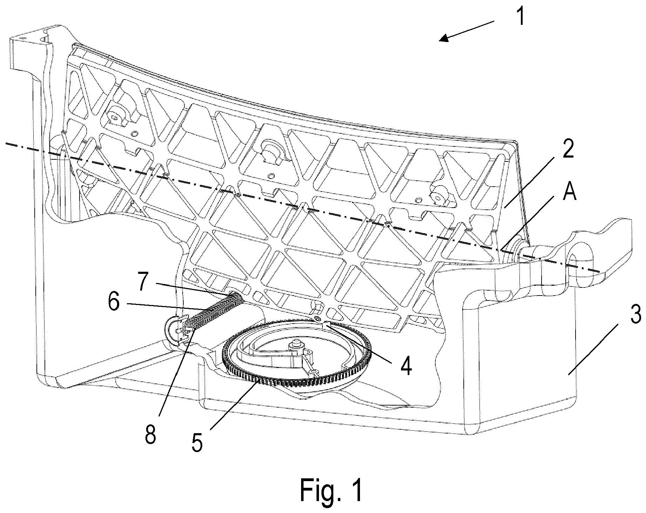

Figure 1 shows a mirror system 1 comprising a mirror mount 2 and a housing 3. The mirror system 1 is especially designed to be employed in a Head-Up Display (HUD) in which a HUD projector projects information via a mirror mounted on the mirror mount 2 onto a windshield of a vehicle, for example. Herein, the housing 3 could be formed integrally with a dashboard of the vehicle or alternatively be mounted thereon.

Commonly, the mirror mount 1 is pivotably mounted in the housing 2 about an axis A. To adjust the mounting position of the mirror mount 1, a bolt 4 of the mirror mount 2 is guided in a cam 5 of the housing 3. By rotating the cam 5, an angular position of the mirror mount 2 with respect to the housing 3 can be adjusted, such that the bolt 4 and cam 5 form a drive for the mirror mount 2.

To achieve a pre-tensioned coupling of the mirror mount 2 to the housing 3, a spring 6 is used to couple the mirror mount 2 to the housing 3. To this end, a first end 7 of the spring 6 is attached to the mirror mount 2 and a second end 8 of the spring 6 is attached to the housing 3. In some embodiments, the described bolt-and-cam drive can be removed or replaced with other drives known in the state of the art, while the pre-tensioning of the mirror mount 2 to the housing 3 is used in all embodiments described below.

As the housing 3 and all its mounted components should have a high resonance frequency in the mounted state, the housing 3 and the respective components should be as stiff and light as possible. This causes the available space for mounting to be restricted and access for attaching the spring 6 between the mirror mount 2 and the housing 3 is limited.

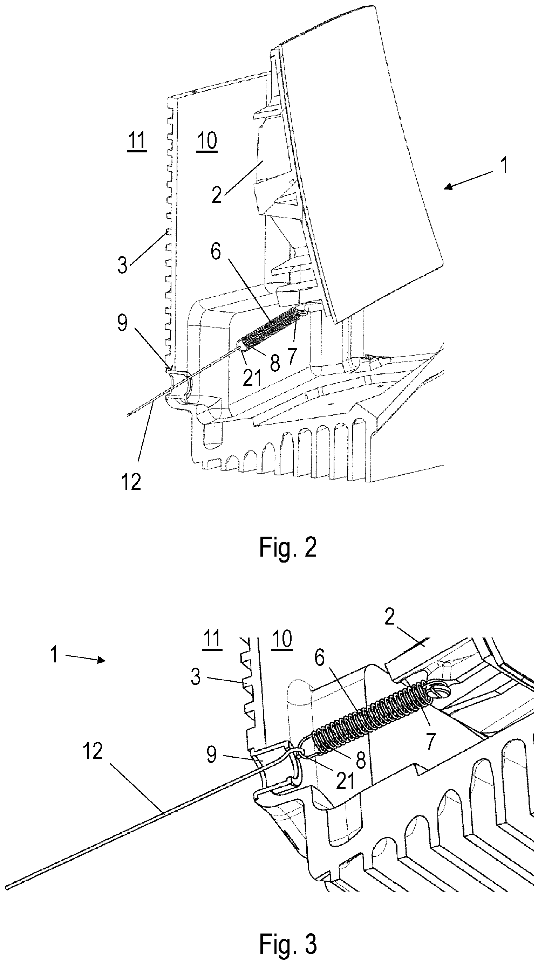

Figures 2 and 3 show that the housing 3 comprises a through-hole 9 that connects a mounting side 10, i.e., a side of the housing 3 on which the mirror mount 2 is to be mounted, and an accessible side 11 of the housing 3. At this point it should be mentioned that the term "accessible side 11" does not imply that said side has to be accessible at all times. Therefore, the accessible side 11 can even be covered by a hood, for example, especially when the mirror system 1 is used in a vehicle. In some embodiments, the accessible side 11 is only accessible when the spring 6 is to be detached from the housing 3.

To attach the spring 6 to the mirror mount 2 and the housing 3, in the beginning the first end 7 of the spring 6 is attached to the mirror mount 2. Then, the mirror mount 2 is brought in the vicinity of the mounting side 10 of the housing 3. At this point, the bolt 4 can be inserted into the cam 5, if present.

Once the mirror mount 2 is in the vicinity of the housing 3, the spring 6 is usually in a state without tension such that its second end 8 is located at the mounting side 10 of the housing 3 or within the through-hole 9. To lead the second end 8 of the spring 6 through the through-hole 9, an auxiliary tool 12, e.g., a hooked needle, can be lead through the through-hole 9. The auxiliary tool 12 is then attached to the second end 8 of the spring 6 so that upon a retraction of the auxiliary tool 12 through the through-hole 9 also the second end 8 of the spring 6 is lead through the through-hole 9. During this process, the spring 6 is tensioned.

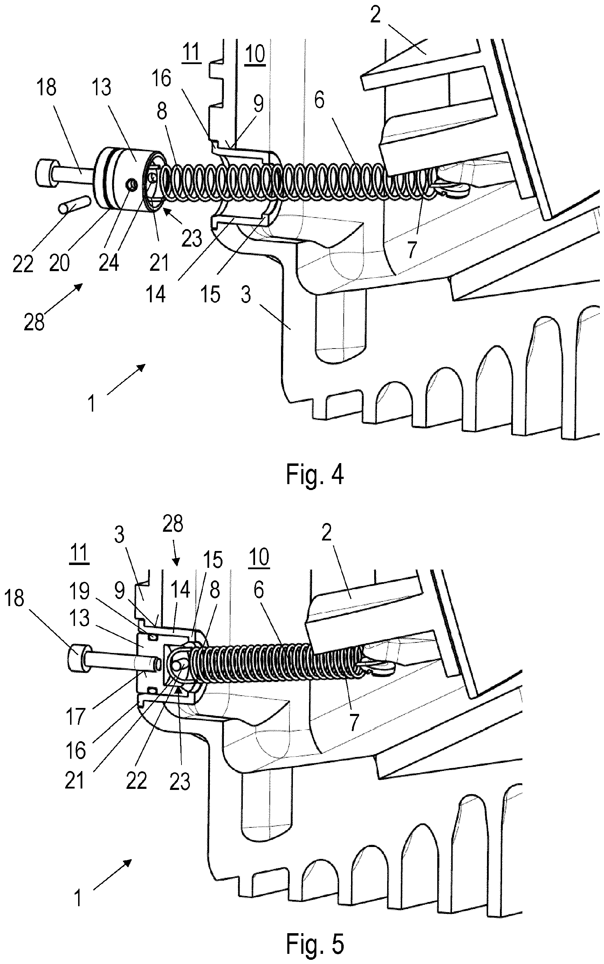

Figure 4 shows that, when the second end 8 of the spring 6 is located at the accessible side 11 of the housing 3, the auxiliary tool 12 is removed from the second end 8 of the spring 6 and a stopper 13 is attached onto the second end 8 of the spring 6. The stopper 13 has such a size that it cannot pass back through the through-hole 9. Therefore, when the second end 8 of the spring 6 is released, the stopper 13 is retained in the through-hole 9 of the housing 3. In this position, the mirror mount 2 is in a mounted state in the housing 3 as the spring 6 is attached both onto the mirror mount 2 and the housing 3 and provides a spring tension between these components.

Alternatively, no auxiliary tool 12 has to be used if the second end 8 of the spring 6 can be lead through the through-hole 9 by other means, e.g., manually.

The stopper 13 can have a circular cross-section such that the stopper has a cylindrical shape. In this case, also the through-hole 9 has a circular cross-section. Alternatively, the stopper 13 could have a rectangular, triangular, oval or any other polygonal or irregular cross-section if the through-hole 9 has a corresponding cross-section.

As shown in figures 4 to 6, a bushing 14 can be inserted into the though-hole 9 of the housing 3 to provide a more stable coupling of the second end 8 of the spring 6 to the housing 3 and/or to prevent wear of the through-hole 9. To retain the stopper 13, the bushing 14 can comprise an inner protrusion 15 or a tapering such that the stopper 13 cannot pass the bushing 14 into the mounting side 10. Furthermore, the bushing 14 can have an outer protrusion 16 or tapering such that it can easily be retained in the housing 3.

In some embodiments, the stopper 13 can be retained at the accessible side 11 of the housing 3, i.e., the stopper 13 does not enter the through-hole 9 when the second end 8 of the spring 6 is released. In other embodiments, the stopper 13 can be retained in the through-hole 9, i.e., enter the through-hole 9 at least partially when the second end 8 of the spring 6 is released. In the embodiments shown in figures 4 to 6, the stopper 13 is even fully retained in the through-hole 9 and flush with the housing 3 when the second end 8 of the spring 6 is released. This can be provided independently of the bushing 14. If a bushing 14 is used, however, also the bushing 14 can be flush with the housing 3 and stopper 13.

To be able to remove the stopper 13 from the housing 3, the stopper 13 can comprise a threaded bore 17 on the side facing the accessible side 11 of the housing 3 to hold an auxiliary screw 18 for removing the stopper 13. Alternatively, the stopper 13 or one of its components could also be magnetic such that a magnetic grip could attach to the stopper 13 for removing the stopper 13 from the through-hole 9 or bushing 14, respectively.

Furthermore, the stopper 13 can comprise a gasket 19 that preferably runs circumferential around the stopper 13 such that it can seal a space between the stopper 13 and the bushing 14 or between the stopper 13 and the through-hole 9, respectively. The stopper 13 can then also comprise a circumferential notch 20 for holding the gasket 19, see figure 4.

A first embodiment to attach the stopper 13 onto the second end 8 of the spring 6 is shown in figures 4 to 6. Here, the spring 6 comprises a hook 21 at the second end 8. The hook 21 has the advantage that it enables an attachment not only for the stopper 13 but also for the auxiliary tool 12.

To couple to the hook 21 of the spring 6 to the stopper 13, the stopper 13 comprises a shaft 22. The shaft 22 can be arranged outside of the stopper 13, e.g., at an end of the stopper 13 facing the spring 6, or it can be provided in an interior space 23 of the stopper 13 as is shown in figures 4 to 6.

The shaft 22 can be integrally formed with the stopper 13, permanently affixed thereto, e.g., by welding, or slidably engage with the stopper, in which case the shaft 22 is referred to as a removable shaft 22. A removable shaft 22 can be extracted from the stopper 13 such that the hook 21 of the spring 6 can easily be inserted into the interior space 23 of the stopper 13. In this position, the shaft 22 can then be lead through holes 24 of the stopper 13 and through the hook 21 positioned between the holes 24. To remove the stopper 13 from the spring 6, the shaft 22 can again be extracted from the holes 24 and hook 21.

In embodiments in which the shaft 22 is removable from the stopper 13, the hook 21 is preferably a closed hook. In other embodiments in which the shaft 22 is integrally formed or permanently attached to the stopper 13, the hook 21 is preferably an open hook, i.e., having one end that can be lead around the shaft 22.

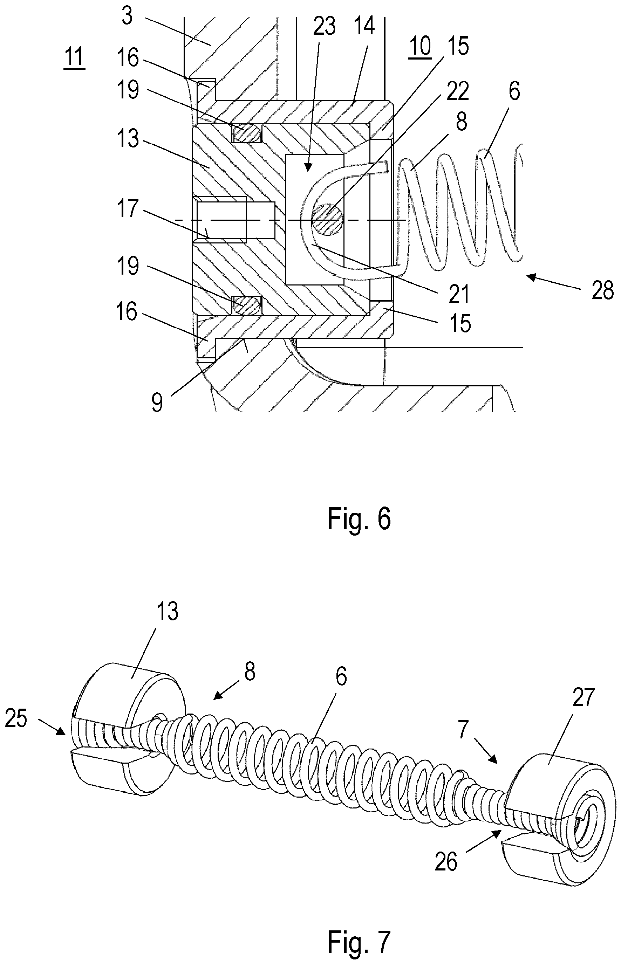

Figure 7 shows an alternative embodiment without hook 21 and shaft 22, in which the second end 8 of the spring 6 is tapered and the stopper 13 has a gap 25 such that the stopper 13 can be slid onto the tapered spring 6 for attaching the stopper 13 to the spring 6. Again, the spring 6 has a size, i.e., diameter, such that at least its second end 8 can be lead through the through-hole 9, while the stopper 13 cannot pass the through-hole 9.

In the embodiment of figure 7 it is furthermore shown that also the first end 7 of the spring 6 can be tapered. Thereby, the spring 6 could be attached to the mirror mount 2 by sliding the first end 7 into a gap of the mirror mount 2. Alternatively, the tapered first end 7 could be slid into a gap 26 of a stopper 27 that can be coupled to the mirror mount 2 in the same way as the stopper 13 is coupled to the housing 3. For example, the first end 7 of the spring 6 could be lead through a through-hole of the mirror mount 2 and could be retained by the stopper 27 that cannot pass the through-hole of the mirror mount 2.

In a further embodiment, for example a cylindrical stopper could be pivotably attached to the second end 8 of the spring 6. In one alignment, the cylindrical stopper could pass the through-hole 9, e.g., if it is arranged with its cylinder axis parallel to the spring 6. After the stopper has been lead through the through-hole 9, the stopper could be pivoted by 90° such that it cannot pass the through-hole 9 anymore. In this alignment, the stopper would be able to retain the second end 8 of the spring 6 in the housing 6. In such embodiments, the step of attaching a stopper 13 onto a second end 8 of the spring 6 can be performed even before the first end of the spring 6 is attached onto the mirror mount 2.

The spring 6 and the stopper 13 can together be provided as a mounting kit 28. The mounting kit comprises the mirror mount 2 and the housing

## Claims

1. Method for mounting a mirror mount (2) for a Head-Up Display in a housing (3), the housing (3) comprising a through-hole (9) between a mounting side (10) of the housing (3) and an accessible side (11) of the housing (3);
wherein the method comprises:
- attaching a first end (7) of a spring (6) to the mirror mount (2);
- providing the mirror mount (2) at the mounting side (10) of the housing (3);
- leading the spring (6) through the through-hole (9) of the housing (3);
- attaching a stopper (13) onto a second end (8) of the spring (6), wherein the stopper (13) is configured to have a size such that it cannot pass the through-hole (9); and
- at the accessible side (11) of the housing (3), releasing the second end (8) of the spring (6) such that the stopper (13) is retained at the accessible side (11) of the housing or in the through-hole (9) of the housing (3).

2. Method according to claim 1, wherein the method comprises the step of leading an auxiliary tool (12) through the through-hole (9) and attaching the auxiliary tool (12) to the second end (8) of the spring (6) before leading the second end (8) of the spring (6) through the through-hole (9), and further comprises the step of removing the auxiliary tool (12) from the second end (8) of the spring (6) before attaching the stopper (13).

3. Method according to claim 1 or 2, comprising the step of inserting a bushing (14), preferably with an inner protrusion (15) or tapering, into the through-hole (9) of the housing (3), wherein the stopper (13) is retainable in the bushing (14).

4. Method according to any one of claims 1 to 3, wherein the stopper (13) comprises a threaded bore (17) on the side facing the accessible side (11) of the housing (3) to hold an auxiliary screw (18) for removing the stopper (13) from the through-hole (9).

5. Method according to any one of claims 1 to 4, wherein the second end (8) of the spring (6) comprises a hook (21) for attaching the stopper (13).

6. Method according to claim 5, wherein the stopper (13) comprises a preferably removable shaft (22) to hold the hook (21) of the spring (6).

7. Method according to any one of claims 1 to 4, wherein the second end (8) of the spring (6) is tapered and the stopper (13) has a gap (25) such that the stopper (13) can be slid onto the tapered spring (6) for attaching the stopper (13) to the spring (6).

8. Method according to any one of claims 1 to 7, wherein the stopper (13) comprises a circumferential gasket (19) such that the stopper (13) is sealed with respect to the housing (3) when the stopper (13) is retained in the through-hole (9).

9. Mounting kit (28) for mounting a mirror mount (2) for a Head-Up Display in a housing (3), the mounting kit comprising the mirror mount (2), the housing (3), a spring (6) and a stopper (13), wherein the housing (3) has a through-hole (9), a first end (7) of the spring (6) is attachable to the mirror mount (2), the stopper (13) is attachable to a second end (8) of the spring (6), and the stopper (13) is configured to have a size such that it cannot pass the through-hole (9) through which the spring (6) can be led.

10. Mounting kit (28) according to claim 9, comprising a bushing (14), preferably with an inner protrusion (15) or tapering, wherein the bushing (14) is insertable into the through-hole (9) of the housing (3) and wherein the stopper (13) is retainable in the bushing (14).

11. Mounting kit (28) according to claim 9 or 10, wherein the stopper (13) comprises a threaded bore (17) on the side facing the accessible side (11) of the housing (3) to hold an auxiliary screw (18) for removing the stopper (13).

12. Mounting kit (28) according to any one of claims 9 to 11, wherein the second end (8) of the spring (6) comprises a hook (21) for attaching the stopper (13).

13. Mounting kit (28) according to claim 12, wherein the stopper (13) comprises a removable shaft (22) to hold the hook (21) of the spring (6).

14. Mounting kit (28) according to any one of claims 9 to 11, wherein the second end (8) of the spring (6) is tapered and the stopper (13) has a gap (25) such that the stopper (13) can be slid onto the tapered spring (6) for attaching the stopper (13) to the spring (6).

15. Mounting kit (28) according to any one of claims 9 to 14, wherein the stopper (13) comprises a circumferential gasket (19) such that the stopper (13) is sealed with respect to the housing (3) when the stopper (13) is retained in the through-hole (9).

## Patentansprüche

1. Verfahren zum Befestigen einer Spiegelhalterung (2) für ein Head-Up-Display in einem Gehäuse (3), wobei das Gehäuse (3) ein Durchgangsloch (9) zwischen einer Befestigungsseite (10) des Gehäuses (3) und einer zugänglichen Seite (11) des Gehäuses (3) umfasst;
wobei das Verfahren Folgendes umfasst:
- Anbringen eines ersten Endes (7) einer Feder (6) an der Spiegelhalterung (2);
- Bereitstellen der Spiegelhalterung (2) auf der Befestigungsseite (10) des Gehäuses (3);
- Durchführen der Feder (6) durch das Durchgangsloch (9) des Gehäuses (3);
- Anbringen eines Stoppers (13) an einem zweiten Ende (8) der Feder (6), wobei der Stopper (13) mit einer Größe ausgelegt ist, sodass er nicht durch das Durchgangsloch (9) passt; und
- auf der zugänglichen Seite (11) des Gehäuses (3), Loslassen des zweiten Endes (8) der Feder (6), sodass der Stopper (13) auf der zugänglichen Seite (11) des Gehäuses oder im Durchgangsloch (9) des Gehäuses (3) gehalten wird.

2. Verfahren nach Anspruch 1, wobei das Verfahren den Schritt des Durchführens eines Hilfswerkzeugs (12) durch das Durchgangsloch (9) und das Anbringen des Hilfswerkzeugs (12) am zweiten Ende (8) der Feder (6) umfasst, bevor das zweite Ende (8) der Feder (6) durch das Durchgangsloch (9) geführt wird, und das weiters den Schritt des Entfernen des Hilfswerkzeugs (12) vom zweiten Ende (8) der Feder (6) umfasst, bevor der Stopper (13) angebracht wird.

3. Verfahren nach Anspruch 1 oder 2, das den Schritt des Einführens einer Hülse (14), vorzugsweise mit einem Innenvorsprung (15) oder einer Verjüngung, in das Durchgangsloch (9) des Gehäuses (3) umfasst, wobei der Stopper (13) in der Hülse (14) gehalten werden kann.

4. Verfahren nach einem der Ansprüche 1 bis 3, wobei der Stopper (13) eine Gewindebohrung (17) auf der Seite umfasst, die der zugänglichen Seite (11) des Gehäuses (3) zugewandt ist und eine Hilfsschraube (18) zum Entfernen des Stoppers (13) aus dem Durchgangsloch (9) hält.

5. Verfahren nach einem der Ansprüche 1 bis 4, wobei das zweite Ende (8) der Feder (6) einen Haken (21) zum Anbringen des Stoppers (13) umfasst.

6. Verfahren nach Anspruch 5, wobei der Stopper (13) eine vorzugsweise entfernbare Stange (22) umfasst, die den Haken (21) der Feder (6) hält.

7. Verfahren nach einem der Ansprüche 1 bis 4, wobei das zweite Ende (8) der Feder (6) verjüngt ist und der Stopper (13) einen Spalt (25) aufweist, sodass der Stopper (13) auf die verjüngte Feder (6) geschoben werden kann, um den Stopper (13) an der Feder (6) anzubringen.

8. Verfahren nach einem der Ansprüche 1 bis 7, wobei der Stopper (13) eine umlaufende Dichtung (19) umfasst, sodass der Stopper (13) in Bezug auf das Gehäuse (3) abgedichtet ist, wenn der Stopper (13) im Durchgangsloch (9) gehalten wird.

9. Befestigungsset (28) zur Befestigung einer Spiegelhalterung (2) für ein Head-Up-Display in einem Gehäuse (3), wobei das Befestigungsset die Spiegelhalterung (2), das Gehäuse (3), eine Feder (6) und einen Stopper (13) umfasst, wobei das Gehäuse (3) ein Durchgangsloch (9) aufweist, ein erstes Ende (7) der Feder (6) an der Spiegelhalterung (2) anbringbar ist, der Stopper (13) am zweiten Ende (8) der Feder (6) anbringbar ist und der Stopper (13) mit einer Größe ausgelegt ist, sodass er nicht durch das Durchgangsloch (9) passt, durch das die Feder (6) geführt werden kann.

10. Befestigungsset (28) nach Anspruch 9, das eine Hülse (14), vorzugsweise mit einem Innenvorsprung (15) oder einer Verjüngung, umfasst, wobei die Hülse (14) in das Durchgangsloch (9) des Gehäuses (3) eingeführt werden kann und wobei der Stopper (13) in der Hülse (14) gehalten werden kann.

11. Befestigungsset (28) nach Anspruch 9 oder 10, wobei der Stopper (13) eine Gewindebohrung (17) auf der Seite umfasst, die der zugänglichen Seite (11) des Gehäuses (3) zugewandt ist und eine Hilfsschraube (18) zum Entfernen des Stoppers (13) hält.

12. Befestigungsset (28) nach einem der Ansprüche 9 bis 11, wobei das zweite Ende (8) der Feder (6) einen Haken (21) zum Anbringen des Stoppers (13) umfasst.

13. Befestigungsset (28) nach Anspruch 12, wobei der Stopper (13) eine entfernbare Stange (22) umfasst, die den Haken (21) der Feder (6) hält.

14. Befestigungsset (28) nach einem der Ansprüche 9 bis 11, wobei das zweite Ende (8) der Feder (6) verjüngt ist und der Stopper (13) einen Spalt (25) aufweist, sodass der Stopper (13) auf die verjüngte Feder (6) geschoben werden kann, um den Stopper (13) an der Feder (6) anzubringen.

15. Befestigungsset (28) nach einem der Ansprüche 9 bis 14, wobei der Stopper (13) eine umlaufende Dichtung (19) umfasst, sodass der Stopper (13) in Bezug auf das Gehäuse (3) abgedichtet ist, wenn der Stopper (13) im Durchgangsloch (9) gehalten wird.

## Revendications

1. Procédé pour monter une monture de miroir (2) pour un affichage tête haute dans un boîtier (3), le boîtier (3) comprenant un trou traversant (9) entre un côté de montage (10) du boîtier (3) et un côté accessible (11) du boîtier (3) ;
dans lequel le procédé comprend les étapes consistant à :
- fixer une première extrémité (7) d'un ressort (6) à la monture de miroir (2) ;
- fournir la monture de miroir (2) sur le côté de montage (10) du boîtier (3) ;
- faire passer le ressort (6) à travers le trou traversant (9) du boîtier (3) ;
- fixer un bouchon (13) sur une seconde extrémité (8) du ressort (6), dans lequel le bouchon (13) est configuré pour avoir une taille telle qu'il ne peut pas passer par le trou traversant (9) ; et
- au niveau du côté accessible (11) du boîtier (3), libérer la seconde extrémité (8) du ressort (6) de sorte que le bouchon (13) soit retenu au niveau du côté accessible (11) du boîtier ou dans le trou traversant (9) du boîtier (3).

2. Procédé selon la revendication 1, dans lequel le procédé comprend l'étape consistant à faire passer un outil auxiliaire (12) à travers le trou traversant (9) et à fixer l'outil auxiliaire (12) à la seconde extrémité (8) du ressort (6) avant de faire passer la seconde extrémité (8) du ressort (6) à travers le trou traversant (9), et comprend en outre l'étape consistant à retirer l'outil auxiliaire (12) à partir de la seconde extrémité (8) du ressort (6) avant de fixer le bouchon (13).

3. Procédé selon la revendication 1 ou 2, comprenant l'étape consistant à insérer un manchon (14), de préférence avec une saillie interne (15) ou effilée, dans le trou traversant (9) du boîtier (3), dans lequel le bouchon (13) peut être retenu dans le manchon (14).

4. Procédé selon l'une quelconque des revendications 1 à 3, dans lequel le bouchon (13) comprend un alésage fileté (17) sur le côté faisant face au côté accessible (11) du boîtier (3) pour maintenir une vis auxiliaire (18) afin de retirer le bouchon (13) à partir du trou traversant (9).

5. Procédé selon l'une quelconque des revendications 1 à 4, dans lequel la seconde extrémité (8) du ressort (6) comprend un crochet (21) pour fixer le bouchon (13).

6. Procédé selon la revendication 5, dans lequel le bouchon (13) comprend un arbre (22) de préférence amovible pour maintenir le crochet (21) du ressort (6).

7. Procédé selon l'une quelconque des revendications 1 à 4, dans lequel la seconde extrémité (8) du ressort (6) est effilée et le bouchon (13) présente un espace (25) de telle sorte que le bouchon (13) peut être coulissé sur le ressort effilé (6) pour fixer le bouchon (13) au ressort (6).

8. Procédé selon l'une quelconque des revendications 1 à 7, dans lequel le bouchon (13) comprend un joint circonférentiel (19) de telle sorte que le bouchon (13) soit scellé par rapport au boîtier (3) lorsque le bouchon (13) est retenu dans le trou traversant (9).

9. Kit de montage (28) pour monter une monture de miroir (2) pour un affichage tête haute dans un boîtier (3), le kit de montage comprenant la monture de miroir (2), le boîtier (3), un ressort (6) et un bouchon (13), dans lequel le boîtier (3) présente un trou traversant (9), une première extrémité (7) du ressort (6) peut être fixée à la monture de miroir (2), le bouchon (13) peut être fixé à une seconde extrémité (8) du ressort (6), et le bouchon (13) est configuré pour avoir une taille telle qu'il ne peut pas passer par le trou traversant (9) à travers lequel le ressort (6) peut être amené à passer.

10. Kit de montage (28) selon la revendication 9, comprenant un manchon (14), de préférence avec une saillie intérieure (15) ou effilée, dans lequel le manchon (14) peut être inséré dans le trou traversant (9) du boîtier (3) et dans lequel le bouchon (13) peut être retenu dans le manchon (14).

11. Kit de montage (28) selon la revendication 9 ou 10, dans lequel le bouchon (13) comprend un alésage fileté (17) sur le côté faisant face au côté accessible (11) du boîtier (3) pour maintenir une vis auxiliaire (18) afin de retirer le bouchon (13).

12. Kit de montage (28) selon l'une quelconque des revendications 9 à 11, dans lequel la seconde extrémité (8) du ressort (6) comprend un crochet (21) pour fixer le bouchon (13).

13. Kit de montage (28) selon la revendication 12, dans lequel le bouchon (13) comprend un arbre amovible (22) pour maintenir le crochet (21) du ressort (6).

14. Kit de montage (28) selon l'une quelconque des revendications 9 à 11, dans lequel la seconde extrémité (8) du ressort (6) est effilée et le bouchon (13) présente un espace (25) de telle sorte que le bouchon (13) peut être coulissé sur le ressort effilé (6) pour fixer le bouchon (13) au ressort (6).

15. Kit de montage (28) selon l'une quelconque des revendications 9 à 14, dans lequel le bouchon (13) comprend un joint d'étanchéité circonférentiel (19) de telle sorte que le bouchon (13) soit scellé par rapport au boîtier (3) lorsque le bouchon (13) est retenu dans le trou traversant (9).
